Europäisches Patentamt

(19) European Patent Office

Office européen des brevets

(11) Numéro de publication : **0 463 914 A1**

(12) # DEMANDE DE BREVET EUROPEEN

(21) Numéro de dépôt : **91401555.7**

(22) Date de dépôt : **12.06.91**

(51) Int. Cl.⁵ : **G01S 17/88**

(30) Priorité : **25.06.90 FR 9007927**

(43) Date de publication de la demande :
**02.01.92 Bulletin 92/01**

(84) Etats contractants désignés :
**AT BE CH DE DK ES FR GB GR IT LI LU NL SE**

(71) Demandeur : **SOCIETE EUROPEENNE DE
SYSTEMES OPTIQUES S.E.S.O.
B.P. 3
F-78373 Plaisir Cédex (FR)**

(72) Inventeur : **De Mollerat du Jeu, Christain Marie
Claude
6, Avenue du Parc
F-13100 Aix en Provence (FR)**

(74) Mandataire : **Ramey, Daniel et al
Cabinet Ores 6 Avenue de Messine
F-75008 Paris (FR)**

(54) **Dispositif de mesure de paramètres météorlogiques.**

(57) Dispositif de mesure de paramètre météorologique, comprenant un générateur laser (10) émettant des signaux laser impulsionnels qui sont au moins en partie rétrodiffusés par l'atmosphère, un récepteur comprenant des moyens de filtrage spectral (16, 18) sensiblement monochromatique, des moyens (24, 26) de réglage de la longueur d'onde centrale du spectre émis et de la longueur d'onde de réception, et des moyens (22) d'analyse du signal rétrodiffusé en fonction de l'altitude, du décalage spectral entre les signaux émis et les signaux rétrodiffusés, et des variations de ces signaux en fonction de la fonction de la direction d'observation.

FIG.1

L'invention concerne un dispositif de mesure de paramètres météorologiques, tels que la vitesse et la direction du vent, la température de l'atmosphère à différentes altitudes, la visibilité, etc.

Il est déjà connu, pour mesurer certains de ces paramètres, d'utiliser un "lidar" (Light Detection And Ranging) qui comprend un générateur laser émettant des signaux dans une direction donnée et un récepteur captant ces signaux après rétrodiffusion partielle par l'atmosphère. Les signaux captés sont ensuite analysés en fonction du temps et de la longueur d'onde, pour déterminer l'altitude des nuages ou la vitesse du vent.

Les systèmes "lidar" connus sont en général spécialisés et conçus pour la mesure d'un ou de quelques paramètres particuliers. Lorsqu'il faut connaître, non seulement les variations d'intensité du signal capté en fonction du temps, mais également le décalage spectral Doppler entre le signal émis et le signal capté ou les variations de largeur spectrale du signal, il faut utiliser soit plusieurs générateurs lasers, soit plusieurs récepteurs, et éventuellement une modélisation d'autres paramètres physiques pour obtenir le ou les paramètres recherchés.

Il en résulte d'une part une augmentation du coût de ces systèmes, et d'autre part, une complexité importante du traitement de signal.

L'invention a notamment pour but d'éviter ces inconvénients.

Elle a pour objet un dispositif permettant de mesurer un grand nombre de paramètres météorologiques au moyen d'un seul générateur laser associé à un seul récepteur.

Elle a également pour objet un dispositif de ce type permettant d'obtenir directement les paramètres recherchés, par simple analyse séquentielle de signaux.

Elle propose, à cet effet, un dispositif de mesure de paramètres météorologiques comprenant un émetteur à générateur laser unique émettant un signal laser impulsionnel, un récepteur unique dont l'axe optique est voisin de celui de l'émetteur ou sensiblement confondu avec lui et qui comporte des moyens de filtrage spectral sensiblement mono-chromatique associés à un photodétecteur et des moyens de mesure et d'analyse du signal laser rétro-diffusé par l'atmosphère, le dispositif étant caractérisé en ce qu'il comprend également des moyens de variation contrôlée de la longueur d'onde centrale du spectre émis par le générateur laser ou de la longueur d'onde sur laquelle est accordé le récepteur, et en ce que les moyens d'analyse séquentielle des signaux rétrodiffusés et captés par le récepteur, comprennent des moyens d'analyse des variations dans le temps des intensites des signaux rétrodiffusés et des moyens d'analyse séquentielle du décalage spectral entre les signaux émis et les signaux rétrodiffusés à une altitude déterminée.

Le dispositif selon l'invention permet d'obtenir directement des mesures de décalage spectral ou de variation de largeur spectrale d'un signal en faisant varier de façon contrôlée, soit la longueur d'onde centrale d'émission du générateur laser, soit la longueur d'onde sur laquelle le récepteur est accordé.

Avantageusement, ce dispositif comprend également des moyens de commande d'orientation, permettant en particulier de réaliser un balayage d'une zone d'espace.

On peut ainsi effectuer des mesures dans des directions différentes et déterminer des paramètres météorologiques tels que la direction du vent et la couverture nuageuse.

Dans un mode de réalisation de l'invention, des moyens de filtrage spectral précités comprennent un filtre interférentiel à faible bande passante associé à un interféromètre du type Pérot-Fabry.

Cet interféromètre peut comprendre des moyens de réglage fin, par exemple du type piézoélectrique, permettant de faire varier de façon très fine la longueur d'onde sur laquelle est accordé le récepteur.

Le générateur laser peut être du type accordable en longueur d'onde, ou bien il est constitué d'une diode laser stabilisée en température, les moyens de variation de la longueur d'onde centrale du spectre émis par le générateur comprenant alors des moyens de réglage de température agissant sur la diode laser.

Le dispositif selon l'invention permet par analyse séquentielle des signaux rétrodiffusés de déterminer les variations de l'intensité du signal reçu en fonction de l'altitude, les variations en longueur d'onde entre le spectre émis et le spectre reçu, pour chaque altitude, et les variations d'intensité et de spectre dans différentes directions.

On peut ainsi, notamment, déterminer:
– la vitesse du vent par analyse du décalage spectral entre le signal émis et le signal reçu pour une altitude déterminée,
– la direction du vent par mesure de la vitesse du vent dans au moins trois directions,
– la température à une altitude donnée par analyse des variations de largeur spectrale entre le signal émis et le signal reçu,
– la visibilité par analyse des variations de l'intensité du spectre rétrodiffusé,
– l'altitude des nuages par analyse des variations de l'intensité du signal rétrodiffusé en fonction de l'altitude,
– la couverture nuageuse par analyse des variations d'altitude des nuages dans différentes directions,
– le niveau de turbulences atmosphériques par analyse des variations d'intensité du signal détecté dans le temps et/ou par analyse des variations du décalage spectral dans le temps.

L'invention sera mieux comprise et d'autres caractéristiques, détails et avantages de celle-ci ressortiront plus clairement de la description qui suit, faite à titre d'exemple en référence aux dessins annexés dans lesquels :

la figure 1 représente schématiquement un dispositif de mesure selon l'invention ;

la figure 2 est un organigramme illustrant le fonctionnement du dispositif selon l'invention.

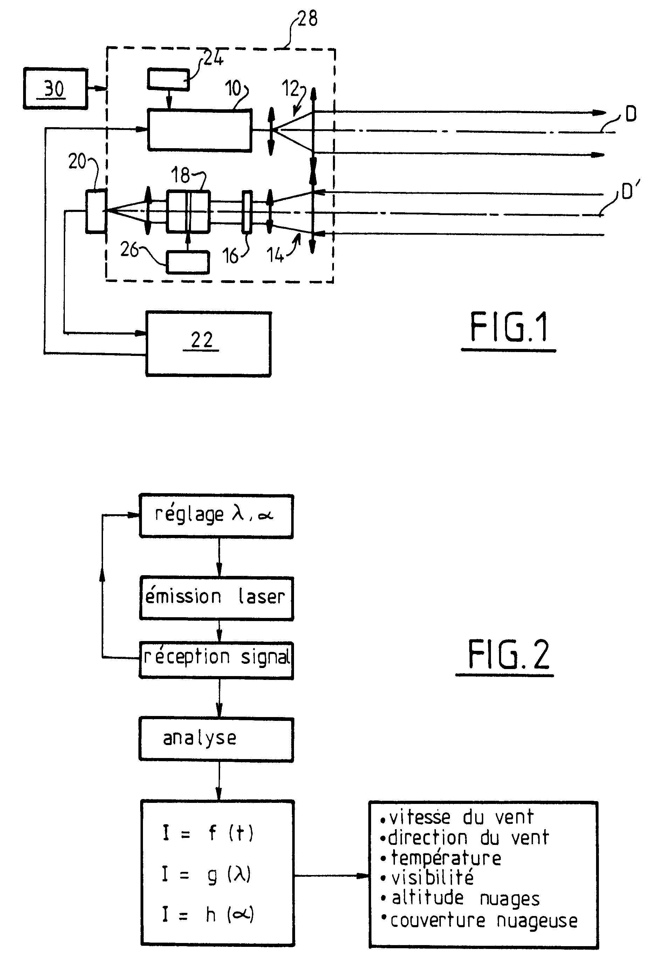

Le dispositif selon l'invention, représenté schématiquement en figure 1, comprend un générateur laser 10 émettant un signal impulsionnel transmis dans une direction D par une optique afocale 12 permettant notamment d'agrandir le diamètre du faisceau émis par le générateur laser 10, et de réduire sa divergence.

Le récepteur associé comprend une optique 14, par exemple un télescope ou une optique afocale, dont l'axe optique D' est très proche ou sensiblement confondu avec l'axe optique D de l'émetteur, et un système de filtrage spectral mono-chromatique, comprenant un filtre interférentiel 16 à très faible bande passante, suivi d'un interféromètre 18 de Pérot-Fabry centré sur une longueur d'onde donnée. Ce système de filtrage spectral 16, 18 est suivi d'un photo-détecteur 20 dont la sortie est reliée à des moyens 22 d'analyse de l'intensité du signal détecté, comprenant des moyens de calcul informatique.

Le générateur laser 10 peut être du type accordable en longueur d'onde, ou bien il est constitué d'une diode laser stabilisée en température et est alors associé à des moyens 24 de variation de température, agissant sur la diode laser pour faire varier de façon correspondante la longueur d'onde centrale du spectre d'émission.

L'interféromètre 18 de Pérot-Fabry peut également être équipé de moyens 26 de réglage fin, par exemple du type piézoélectrique, permettant de modifier la longueur d'onde du signal transmis au photo-détecteur 20.

Les moyens 22, constitués essentiellement par un micro-ordinateur, vont également commander le fonctionnement du générateur laser 10, et celui des moyens 24 et 26 précités.

L'ensemble du système optique peut être monté sur un support mobile 28, associé à des moyens de commande d'orientation 30, et permettant par exemple de faire balayer une zone d'espace par les axes optiques D, D'.

Le fonctionnement du dispositif selon l'invention va maintenant être décrit en référence à la figure 2.

Le générateur laser 10 émet dans la direction D un signal impulsionnel dont la fréquence peut être comprise entre 1 et 1000 Hz environ, dont le spectre en longueur d'onde est connu et centré sur une longueur d'onde $\lambda e$ qui est par exemple de 800 ou de 1550 nm lorsqu'on utilise une diode laser. La puissance d'émission du générateur 10 est par exemple de 1 mJ par impulsion. Dans le cas d'une source laser solide, elle peut dépasser 1 J.

La durée des impulsions est par exemple de 100 ns.

Les impulsions laser émises sont en partie rétrodiffusées par les particules de l'atmosphère (diffusion Rayleigh-Brillouin et/ou Mie) et sont captées par l'optique 14 du récepteur, pour être transmises au filtre interférentiel 16. Celui-ci a une bande passante très faible, de l'ordre du nanomètre et transmet les signaux qu'il reçoit à l'interféromètre 18, qui est par exemple centré sur la valeur moyenne de la longueur d'onde centrale $\lambda e$ d'émission, avec une précision de l'ordre de 10 picomètres par exemple. Le signal de sortie de l'interféromètre 18 est transmis au photodétecteur 20, qui est par exemple une photodiode au germanium ou un tube photomultiplicateur, selon la valeur de la longueur d'onde centrale d'émission.

Les moyens 22 réalisent une analyse de la variation en fonction du temps de l'intensité du signal de sortie du détecteur 20. Cette variation d'intensité en fonction du temps correspond à une variation de l'intensité du signal en fonction de l'altitude.

On modifie ensuite soit les conditions spectrales (par variation de la longueur d'onde centrale d'émission ou de la longueur d'onde de réception), soit les conditions spatiales (par variation d'un angle $\alpha$ de l'axe optique D, D' par rapport à un système de référence) et on répète les analyses précédentes.

Une mesure météorologique est donc constituée par l'analyse de NxMxL émissions d'impulsions laser, N étant un nombre d'émissions d'impulsions identiques dans des conditions spectrales et spatiales données, M étant le nombre de valeurs que l'on donne successivement à la longueur d'onde centrale d'émission ou à la longueur d'onde de réception, L étant le nombre de directions successives d'observation.

La durée d'une telle mesure est déterminée de façon à ce que les paramètres à mesurer puissent être considérés comme constants pendant la durée de la mesure (c'est-à-dire que leurs fluctuations restent inférieures à la précision de la mesure), cette durée de mesure pouvant être de l'ordre d'une minute ou moins par exemple.

Selon l'invention, les mesures sont relatives et sont réalisées par rapport à des signaux rétrodiffusés à l'altitude zéro.

Pour chaque mesure météorologique, une analyse de l'intensité du signal rétrodiffusé par tranches d'altitude peut être suivie par une analyse séquentielle en fonction de la longueur d'onde et par une analyse séquentielle en fonction de la direction d'observation. Il est ainsi possible, comme représenté schématiquement en figure 2, de déterminer :

– la vitesse du vent par analyse du décalage spectral entre le signal émis et le signal rétrodiffusé à une altitude donnée,

– la direction du vent par mesure de sa vitesse dans au moins trois directions différentes,

– la température à une altitude donnée par analyse des variations de largeur spectrale entre le signal émis et le signal rétrodiffusé à cette altitude,

– la visibilité par analyse des variations de l'intensité du spectre rétrodiffusé,

– l'altitude des nuages par analyse des variations de l'intensité du signal rétrodiffusé en fonction de l'altitude,

– la couverture nuageuse par analyse des variations de l'altitude des nuages en fonction de la direction d'observation.

– le niveau de turbulences atmosphériques par analyse des variations d'intensité du signal détecté dans le temps et/ou par analyse des variations du décalage spectral dans le temps.

## Revendications

1. Dispositif de mesure de paramètres météorologiques, comprenant un émetteur à générateur laser (10) émettant un signal laser impulsionnel, un récepteur (16, 18, 20) unique dont l'axe optique D' est voisin de celui D de l'émetteur ou sensiblement confondu avec lui et qui comporte des moyens (16, 18) de filtrage spectral sensiblement monochromatique associés à un photodétecteur (20) et des moyens (14-22) de mesure et d'analyse du signal laser rétrodiffusé par l'atmosphère, le dispositif étant caractérisé en ce qu'il comprend également des moyens (24, 26) de variation contrôlée de la longueur d'onde centrale du spectre émis par le générateur laser (10) ou de la longueur d'onde sur laquelle est accordé le récepteur, et en ce que les moyens d'analyse séquentielle des signaux rétrodiffusés et captés par le récepteur, comprennent des moyens d'analyse des variations dans le temps des intensités des signaux rétrodiffusés et des moyens d'analyse séquentielle du décalage spectral entre les signaux émis et les signaux rétrodiffusés à une altitude déterminée.

2. Dispositif selon la revendication 1, caractérisé en ce qu'il comprend également des moyens (30) de commande d'orientation, permettant en particulier de réaliser un balayage d'une zone d'espace.

3. Dispositif selon la revendication 1 ou 2, caractérisé en ce que les moyens de filtrage spectral comprennent un filtre interférentiel (16) à faible bande passante associé à un interféromètre (18) du type Pérot-Fabry.

4. Dispositif selon la revendication 3, caractérisé en ce que ledit interféromètre (18) comprend des moyens (26) de réglage fin, par exemple du type piézo-électrique.

5. Dispositif selon l'une des revendications précédentes, caractérisé en ce que le générateur laser (10) est du type accordable en longueur d'onde.

6. Dispositif selon l'une des revendications 1 à 4, caractérisé en ce que le générateur laser (10) est une diode laser stabilisée en température, et en ce que les moyens de variation de la longueur d'onde centrale du spectre émis comprennent des moyens de réglage de température agissant sur la diode laser.

7. Dispositif selon l'une des revendications précédentes, caractérisé en ce que l'émetteur comprend une optique afocale (12) de grandissement du diamètre du faisceau émis, et en ce que le récepteur comprend un télescope ou une optique afocale (14) de captation du signal rétrodiffusé.

8. Dispositif selon l'une des revendications précédentes, caractérisé en ce qu'il est destiné à mesurer la vitesse du vent par détermination du décalage en longueur d'onde entre le spectre émis par le générateur laser et le spectre rétrodiffusé à une altitude déterminée.

9. Dispositif selon la revendication 8, caractérisé en ce qu'il est destiné à déterminer la direction du vent par mesure de la vitesse du vent dans au moins trois directions différentes.

10. Dispositif selon l'une des revendications 1 à 7, caractérisé en ce qu'il est destiné à la mesure de la température de l'atmosphère par analyse des variations de largeur spectrale des signaux rétrodiffusés à des altitudes déterminées.

11. Dispositif selon l'une des revendications 1 à 7, caractérisé en ce qu'il est destiné à la détermination de la visibilité par analyse des variations des intensités des spectres des signaux rétrodiffusés.

12. Dispositif selon l'une des revendications 1 à 7, caractérisé en ce qu'il est destiné à la mesure de l'altitude des nuages par analyse des variations des intensités des signaux rétrodiffusés en fonction de l'altitude.

13. Dispositif selon la revendication 12, caractérisé en ce qu'il est destiné à la détermination de la couverture nuageuse par analyse des variations de l'altitude des nuages en fonction de l'orientation du dispositif.

14. Dispositif selon la revendication 8, caractérisé en ce qu'il est destiné à la détermination du niveau de turbulences atmosphériques.

FIG.1

réglage λ, α

émission laser

réception signal

analyse

I = f (t)

I = g (λ)

I = h (α)

• vitesse du vent
• direction du vent
• température
• visibilité
• altitude nuages
• couverture nuageuse

FIG.2

EP 0 463 914 A1

Office européen
des brevets

**RAPPORT DE RECHERCHE EUROPEENNE**

Numero de la demande

EP 91 40 1555

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | CA-A-1 069 725 (HARA) | 1,3,7,8, 11,14 | G01S17/88 |
| Y | | 2,4-6,9, 10,12,13 | |
| | * page 5, ligne 25 - page 10, ligne 14; figures * | | |
| Y | US-A-3 723 007 (LEONARD) <br> * colonne 3, ligne 17 - colonne 3, ligne 43 * | 2 | |
| Y | GB-A-2 215 039 (PLESSEY) <br> * page 6, ligne 9 - page 6, ligne 16 * | 4 | |
| Y | WO-A-8 707 018 (HIBSHMAN CORP) <br> * page 8, ligne 7 - page 15, ligne 21; figures 1-3 * | 5,6 | |
| Y | PROCEEDINGS OF THE IEEE. <br> vol. 77, no. 3, Mars 1989, NEW YORK US <br> pages 408 - 409; <br> GARDNER: 'SODIUM RESONACE FLUORESCENCE LIDAR APPLICATIONS IN ATMOSPHERIC SCIENCE AND ASTRONOMY ' | 9,10 | |
| Y | DE-A-2 924 490 (FRÜGEL) <br> * page 8 - page 14 * | 12,13 | **DOMAINES TECHNIQUES RECHERCHES (Int. Cl.5 )** <br><br> G01S <br> G01N |
| A | APPLIED OPTICS. <br> vol. 7, no. 3, 1 Février 1988, NEW YORK US <br> pages 441 - 443; <br> SCHOTLAND ET AL: 'CONCEPTUAL TEST OF FREQUENCY DIVERSITY LIDAR ' | 1,8,14 | |

Le présent rapport a été établi pour toutes les revendications

| Lieu de la recherche | Date d'achèvement de la recherche | Examinateur |
|---|---|---|
| LA HAYE | 02 OCTOBRE 1991 | DEVINE J.J. |

6